# FASCICULE DE BREVET EUROPEEN

(11) **EP 1 723 791 B1**
(45) Date de publication et mention de la délivrance du brevet: **19.08.2009**
(21) Numéro de dépôt: 05716846.0
(22) Date de dépôt: 01.03.2005
(51) Int. Cl.: H04N 7/167

(54) **METHODE DE SECURISATION D'UN EVENEMENT TELEDIFFUSE**
VERFAHREN ZUM SICHERN EINES VON EINEM AUSTRAHLER GESENDETEN VERWÜRFELTEN INHALTS
METHOD OF SECURING A SCRAMBLED CONTENT SENT BY A BROADCASTER

(30) Priorité: 10.03.2004 EP 04100969; 11.06.2004 EP 04102667
(43) Date de publication de la demande: 22.11.2006
(73) Titulaire: Nagravision S.A., 1033 Cheseaux-sur-Lausanne (CH)
(72) Inventeur: KSONTINI, Rached, CH-1004 Lausanne (CH); KUDELSKI, Henri, CH-1091 Grandvaux (CH)
(74) Mandataire: Leman Consulting S.A.
(86) Numéro de dépôt international: PCT/EP2005/050871
(87) Numéro de publication internationale: WO 2005/099265

(56) Documents cités:
- EP-A- 0 817 485
- WO-A-20/04010698
- FR-A- 2 831 737
- US-A- 6 157 719
- MENEZES A J ET AL: "Handbook of applied cryptography , passage" HANDBOOK OF APPLIED CRYPTOGRAPHY, CRC PRESS SERIES ON DISCRETE MATHEMATICES AND ITS APPLICATIONS, BOCA RATON, FL, CRC PRESS, US, 1997, pages 497-499, XP002304775 ISBN: 0-8493-8523-7 cité dans la demande
- "FUNCTIONAL MODEL OF A CONDITIONAL ACCESS SYSTEM" EBU REVIEW- TECHNICAL, EUROPEAN BROADCASTING UNION. BRUSSELS, BE, no. 266, 21 décembre 1995 (1995-12-21), pages 64-77, XP000559450 ISSN: 0251-0936

## Description

La présente demande concerne le domaine de la télévision à péage, en particulier l'encryption de données audio/vidéo connu sous le nom de Common Scrambling.

De tels systèmes sont notamment utilisés dans le domaine de la télévision numérique à péage. Dans ce cas, le flux numérique de données transmis vers le téléviseur est chiffré afin de pouvoir en contrôler l'utilisation et de définir des conditions pour une telle utilisation. Ce chiffrement est réalisé grâce à des mots de contrôle (Control Words) qui sont changés à intervalle régulier (typiquement entre 5 et 30 secondes, bien que des intervalles nettement plus longs puissent être utilisés) afin de dissuader toute attaque visant à retrouver un tel mot de contrôle.

Pour que le récepteur puisse déchiffrer le flux chiffré par ces mots de contrôle, ces derniers lui sont envoyés indépendamment du flux dans des messages de contrôle (ECM) chiffrés par une clé propre au système de transmission (clé de transmission) entre un centre de gestion et un module de sécurité de l'unité d'utilisateur. En effet, les opérations de sécurité sont effectuées dans un module de sécurité (SC) qui est généralement réalisé sous la forme d'une carte à puce, réputée inviolable. La clé de transmission servant à encrypter les messages de contrôle, est commune à tous les modules de sécurité et est changée régulièrement. Elle peut être de type symétrique ou asymétrique selon l'implémentation.

Ce module de sécurité peut être soit de type amovible soit directement intégré au récepteur (circuit BGA par exemple).

Lors du déchiffrement d'un message de contrôle (ECM), il est vérifié, dans le module de sécurité (SC), que le droit pour accéder au flux considéré est présent. Ce droit peut être géré par des messages d'autorisation (EMM) qui chargent un tel droit dans le module de sécurité. D'autres possibilités sont également envisageables telles que l'envoi de clés de déchiffrement.

Pour la suite de l'exposé, on appellera "événement" un contenu vidéo, audio (par exemple MP3) ou données (programme de jeu par exemple) qui est chiffré selon la méthode connue des mots de contrôle, chaque événement pouvant être chiffré par un ou plusieurs mots de contrôle, chacun ayant une durée de validité déterminée.

Le module de sécurité est réputé inviolable. Néanmoins, il est possible, avec des moyens très importants d'extraire les secrets contenus dans un tel module (clé de transmission par exemple).

Cette capacité permet à un tiers malveillant d'accéder un contenu des messages de contrôle et de les modifier par exemple en changeant les conditions liées au déchiffrement des mots de contrôle CW. Une fois cette opération effectuée, un nouveau message est généré, toujours grâce à la clé de transmission et ce message est transmis à tous les bénéficiaires illicites, client du tiers.

On peut imaginer ainsi que le tiers malveillant modifie les conditions d'accès de tous les événements diffusés pour leur attribuer le statut de "libre". Tous les utilisateurs de ces messages, disposant d'un abonnement minimal, pourront profiter de toutes les offres de fournisseur sans avoir à en payer le prix correspondant. L'utilisateur malveillant dispose pour ce faire d'un décodeur conventionnel avec un module de sécurité toujours à jour au niveau cryptographique. Malgré cela, le fournisseur de service verra une partie de ses revenus spoliés par la pratique du tiers malveillant, sans moyen pour y remédier.

Une première méthode pour enrayer ce phénomène nécessite une voie de retour. La connaissance des événements effectivement consommés permet de mettre à jour une différence des droits alloués à un utilisateur et les événements consommés avec ce droit.

En l'absence d'une voie de retour, le fournisseur de service ne pourra empêcher une telle utilisation abusive.

Dans le livre "Handbook of applied cryptography" de Mezenes at al, (ISBN 0-8493-8523-7) page 498, il est décrit l'utilisation d'un nombre aléatoire *r*_{A} que l'on utilise comme clé après avoir appliqué sur ce nombre une fonction unidirectionnelle. Dans le contexte de la télévision à péage, cette manière de faire n'apporte aucune solution au problème de modification des conditions d'accès. En effet, ces conditions de sont pas concernées par ce mécanisme et si l'on prend pour hypothèse que le module de sécurité a été violé, le mot de contrôle transmis sous la forme telle que divulguée dans ce document pourra être retrouvé et rediffusé à des tiers malveillants.

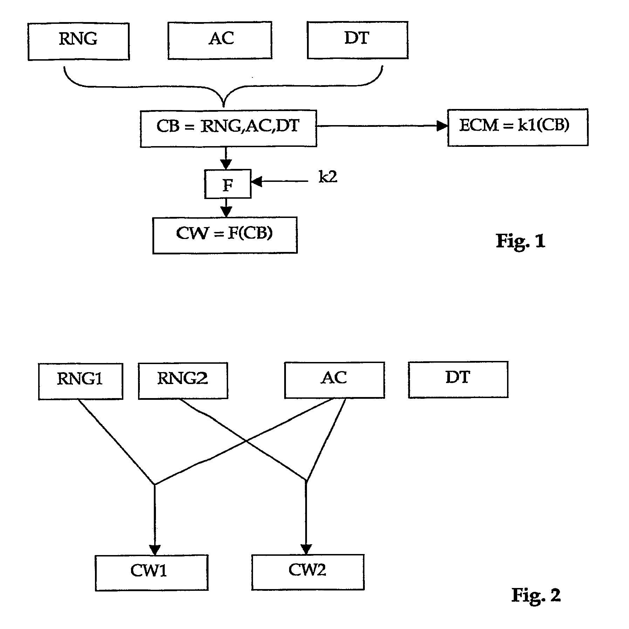

Le document US 6,157,719 illustre bien l'état de la technique à savoir l'utilisation d'un générateur aléatoire pour générer les clés de chiffrement du contenu et l'envoi de cette clé dans un message chiffré (figure 2A). Les conditions d'accès au contenu sont inclus dans le message ECM et une fonction de hachage (Hash-function) est utilisée pour authentifier le message (colonne 6, ligne 45). Le mot de contrôle CW est toujours encrypté (colonne 6, ligne 51) avant son envoi.

Le but de la présente invention est de proposer une solution pour empêcher une utilisation abusive des secrets révélés par l'analyse interne du module de sécurité.

Ce but est atteint par une méthode de sécurisation d'un événement par des mots de contrôle, l'utilisation de cet événement par des unités d'utilisateurs étant soumis à des conditions d'accès, cette méthode comprenant les étapes suivantes:
- génération d'un nombre pseudo-aléatoire,
- formation d'un bloc de contrôle par l'association du nombre pseudo-aléatoire et des conditions d'accès,
- calcul du mot de contrôle par l'application d'une fonction unidirectionnelle sur le bloc de contrôle,
- utilisation du mot de contrôle pour encrypter l'événement,
- transmission du bloc de contrôle aux unités d'utilisateurs dans un bloc de données d'un message de contrôle (ECM).

Ainsi, la solution de l'invention consiste à faire intervenir les conditions d'accès dans le mot de contrôle (ou clé) d'encryption des données.

La fonction unidirectionnelle est connue en soi et par exemple de type Hash. Cette opération garantit qu'un tiers, connaissant le mot de contrôle, ne peut reformer un bloc de données avec d'autres conditions d'accès.

Si les conditions d'accès sont modifiées, le module de sécurité licite d'une unité d'utilisateur va calculer le mot de contrôle sur des conditions d'accès différentes et le mot de contrôle résultant ne sera pas correct. Par conséquent, l'événement ne pourra pas être décrypté.

L'invention sera mieux comprise grâce à la description détaillée qui va suivre et qui se réfère aux dessins annexés qui sont donnés à titre d'exemple nullement limitatif, à savoir:
- la figure 1 illustre la génération d'un mot de contrôle,
- la figure 2 illustre le traitement d'un message comprenant deux mots de contrôle.

Sur la figure 1, un premier élément variable est généré de manière pseudo-aléatoire, l'aléa RNG. C'est une variable qui peut être générée de manière aléatoire, où obtenu par une table secrète ou de toute autre manière pour autant qu'elle ne puisse pas être prédite à l'avance. Le second élément est constitué par les conditions d'accès AC à l'événement. Elles définissent les droits nécessaires que l'utilisateur doit disposer pour que le module de sécurité dudit utilisateur retourne le mot de contrôle au décodeur. Il peut s'agir de la description d'un abonnement, d'un droit lié audit événement ou d'un montant à débiter au crédit contenu dans le module de sécurité.

Selon l'invention, les deux paramètres aléa et conditions d'accès sont les deux éléments nécessaires pour former le mot de contrôle. Optionnellement, il est prévu d'ajouter la date DT de diffusion, cette date pouvant jouer un rôle important lorsqu'il s'agit de vérifier la validité d'un abonnement. En effet, si un abonnement n'a pas été renouvelé, la manipulation de cette date peut faire croire au module de sécurité que l'événement peut être visualisé du fait que la date dudit événement est comprise dans la période de validité de l'abonnement.

Selon notre exemple, le bloc de contrôle CB comprend les trois éléments, à savoir l'aléa RNG, les conditions d'accès AC et la date DT.

Ce bloc est ensuite passé par une fonction unidirectionnelle F telle qu'une fonction de hachage Hash. Le résultat est unique pour l'ensemble du bloc de contrôle et la modification d'un bit du bloc provoque la modification complète de la sortie de la fonction. On considère qu'il n'est pas possible de déterminer le bloc de contrôle sur la base du résultat de cette fonction.

La sortie de cette fonction constitue le mot de contrôle CW et est utilisée pour encrypter tout ou partie de l'événement.

Le bloc de contrôle est transmis vers le décodeur dans un message ECM. Selon une première variante, ce message est encrypté par une clé de transmission k1.

Lors de la réception par le décodeur, et subséquemment par le module de sécurité, le message est décrypté par la clé correspondante k1 et la même fonction F unidirectionnelle est appliquée au bloc de contrôle CB pour obtenir le mot de contrôle.

On remarquera donc que la modification d'une quelconque partie du bloc de contrôle, soit, les conditions d'accès par exemple, a pour résultat l'obtention d'un mot de contrôle incorrect.

Selon une deuxième variante, la fonction unidirectionnelle F est paramétrée par une clé k2. De telles fonctions sont connues et elles utilisent la clé comme vecteur d'initialisation.

Cette sécurité supplémentaire permet d'envisager la transmission du bloc de contrôle CB en clair, soit sans l'encryption par la clé k1.

Sur la figure 2 est illustré un exemple de message comprenant deux blocs de contrôle pour la préparation de deux mots de contrôle. Il est à noter que le décodeur doit disposer du mot de contrôle courant et du mot de contrôle suivant afin d'assurer une transition sans coupure entre la partie de l'événement encrypté par le premier mot de contrôle et la partie de l'événement encrypté par le second mot de contrôle.

Pour cela, le message contient deux aléas RNG1 et RNG2. Du fait que l'on considère que les conditions d'accès sont identiques pour ces deux mots de contrôle, ces derniers sont donc calculés sur la base de l'aléa et des conditions d'accès tel qu'illustré sur la figure 2.

## Revendications

1. Méthode de sécurisation d'un événement par des mots de contrôle (CW), l'utilisation de cet événement par des unités d'utilisateurs étant soumis à des conditions d'accès (AC), cette méthode comprenant les étapes suivantes:
- génération d'un nombre pseudo-aléatoire (RNG),
- formation d'un bloc de contrôle (CB) par l'association du nombre pseudo-aléatoire (RNG) et des conditions d'accès (AC),
- calcul du mot de contrôle (CW) par l'application d'une fonction unidirectionnelle (F) sur le bloc de contrôle (CB),
- utilisation du mot de contrôle (CW) pour encrypter l'événement,
- transmission du bloc de contrôle (CB) aux unités d'utilisateurs dans un bloc de données d'un message de contrôle (ECM).

2. Méthode selon la revendication 1, **caractérisée en ce que** la fonction unidirectionnelle (F) est initialisée par une clé de chiffrement (k2).

3. Méthode selon la revendication 1, **caractérisée en ce que** la date courante (DT) est ajoutée au bloc de contrôle (CB) et participe à la formation du mot de contrôle (CW).

4. Méthode selon la revendication 2, **caractérisée en ce que** le message de contrôle (ECM) comprend le bloc de données en clair.

5. Méthode selon la revendication 1, **caractérisée en ce que** le message de contrôle (ECM) comprend le bloc de données sous forme encryptée par une clé de transmission (k1).

6. Méthode selon la revendication 1, **caractérisée en ce que** le message de contrôle (ECM) comprend deux aléas (RNG1, RNG2) qui en combinaison avec les conditions d'accès (AC) et la fonction unidirectionnelle (F) permettent de générer respectivement deux mots de contrôle (CW1, CW2).

## Claims

1. Method to secure an event with control words (CW), the use of this event by a user unit being subject to access conditions (AC), said method comprising the following steps:
- generation of a pseudo-random number (RNG),
- formation of a control block (CB) by the association of the pseudo-random number (RNG) and the access conditions (AC),
- calculation of the control word (CW) by the use of a unidirectional function (F) on the control block (CB),
- use of the control word (CW) to encrypt the event,
- transmission of the control block (CB) to the user unit.

2. Method according to claim 1, **characterized in that** the unidirectional function (F) is initialized by an encryption key (k2).

3. Method according to claim 1, **characterized in that** a current date (DT) is added at the control block (CB) and participates in the formation of the control word (CW).

4. Method according to claim 2, **characterized in that** the control block in clear is transmitted in clear in a control message (ECM).

5. Method according to claim 1, **characterized in that** the control block in the form encrypted with a transmission key (k1) is transmitted in clear in a control message (ECM)

6. Method according to claim 1, **characterized in that** the control block (CB) transmitted in a control message (ECM) includes two variables (RNG1, RNG2) which in combination with the access conditions (AC) and the unidirectional function (F) allow the generation of two control-words respectively (CW1, CW2).

## Patentansprüche

1. Verfahren zur Sicherung eines Ereignisses durch Kontrollwörter (CW), wobei die Ereignisnutzung durch Nutzereinheiten von Zugriffsbedingungen (AC) abhängig gemacht wird; zu diesem Verfahren gehören folgende Schritte:
- Generierung einer Pseudozufallszahl (RNG),
- Erzeugung eines Kontrollblocks (CB) durch Verbindung der pseudozufallsgenerierten Zahl (RNG) mit den Zugriffsbedingungen (AC),
- Berechnung des Kontrollworts (CW), indem eine unidirektionale Funktion (F) auf den Kontrollblock (CB) angewendet wird,
- Verwendung des Kontrollworts (CW) zur Verschlüsselung des Ereignisses,
- Übermittlung des Kontrollblocks (CB) an die Nutzereinheiten in einem Datensatz von einer Kontrollnachricht ECM.

2. Verfahren nach Patentanspruch 1, **dadurch gekennzeichnet, dass** die unidirektionale Funktion (F) durch einen Schlüssel (k2) initialisiert wird.

3. Verfahren nach Patentanspruch 1, **dadurch gekennzeichnet, dass** das aktuelle Datum (DT) zum Kontrollblock (CB) hinzugefügt wird und zur Erzeugung des Kontrollworts (CW) beiträgt.

4. Verfahren nach Patentanspruch 2, **dadurch gekennzeichnet, dass** die Kontrollnachricht (ECM) den unverschlüsselten Datensatz beinhaltet.

5. Verfahren nach Patentanspruch 1, **dadurch gekennzeichnet, dass** die Kontrollnachricht (ECM) den Datensatz in mit dem Übermittlungsschlüssel (k1) verschlüsselter Form beinhaltet.

6. Verfahren nach Patentanspruch 1, **dadurch gekennzeichnet, dass** die Kontrollnachricht (ECM) zwei Zufallszahlen (RNG1, RNG2) beinhaltet, die kombiniert mit den Zugriffsbedingungen (AC) und der unidirektionalen Funktion (F) die entsprechende Erzeugung von zwei Kontrollwörtern (CW1, CW2) erlauben.
